# EUROPEAN PATENT APPLICATION

(11) **EP 2 832 871 A1**
(43) Date of publication of application: **04.02.2015**
(21) Application number: 13769775.1
(22) Date of filing: 31.01.2013
(51) Int. Cl.: C22B 11/00, B01J 20/20, B01J 20/34, C22B 3/24

(54) **METHOD FOR ELUTING SILVER AND METAL ADSORBED BY ACTIVATED CARBON, AND METHOD FOR RECOVERING METAL AND SILVER EMPLOYING SAME**

(30) Priority: 30.03.2012 JP 2012082295; 16.11.2012 WO PCT/JP2012/079857
(71) Applicant: JX Nippon Mining & Metals Corporation, Tokyo 100-8164 (JP)
(72) Inventor: HATANO,Kazuhiro, Hitachi-shi Ibaraki 317-0056 (JP); KATSUKAWA,Koji, Hitachi-shi Ibaraki 317-0056 (JP); ONO,Eiki, Hitachi-shi Ibaraki 317-0056 (JP); SANO,Masaki, Hitachi-shi Ibaraki 317-0056 (JP); AOTO,Yuki, Hitachi-shi Ibaraki 317-0056 (JP)
(74) Representative: Yeadon, Mark
(86) International application number: PCT/JP2013/052265
(87) International publication number: WO 2013/145849

(57) **Abstract**

Gold and silver adsorbed on activated carbon are efficiently eluted. The method of eluting gold and silver adsorbed on activated carbon, the method comprises: eluting gold and silver on activated carbon, on which at least the gold and silver are adsorbed, by using an aqueous thiosulfate solution that is maintained at less than pH 7.

## Description

### Technical Field

The present invention relates to a method of eluting gold and silver adsorbed on activated carbon and a method of recovering gold and silver using the method.

### Background Art

Gold and silver are metals of great value. These are present as fine metal particles in natural veins and included in small amounts as byproducts in pyrite, chalcopyrite, and other metal sulfide ores. Recovering methods are disclosed in, for example, Patent Literature 1 and the like, and pyrometallurgical and hydrometallurgical recovery process for gold and silver are studied. In the case of hydrometallurgical process, gold or silver is dissolved in aqueous solution by leaching, and then adsorbed onto activated carbon. In recovering gold and silver from a recovered activated carbon, a recovering method by incinerating the activated carbon or a recovering method by eluting gold in a solution is conducted.

### Citation List

### Patent Literature

Patent Literature 1: JP 6-145828 A

### Summary of Invention

### Technical Problem

It is known that both an elution speed and recovering ratio will improve when cyanide solution is used as an eluent for eluting gold and silver adsorbed on activated carbon. However, a cyanide solution has toxicity, and thus there are many restrictions for using it. Accordingly, a recovering method for gold and silver adsorbed on activated carbon by eluting them efficiently without using the cyanide solution has been eagerly anticipated.

### Solution to Problem

The present inventor has constantly conducted studies for resolving the above-described problems, and as a result, found that when the gold and silver adsorbed on activated carbon are eluted by using an aqueous thiosulfate solution that is maintained at predetermined pH 7, the gold and the silver can be efficiently eluted.

According to an aspect of the invention that has been completed based on such research findings, a method of eluting gold and silver adsorbed on activated carbon includes: eluting gold and silver on activated carbon, on which at least the gold and silver are adsorbed, by using an aqueous thiosulfate solution that is maintained at less than pH 7.

In an embodiment of the method of eluting gold and silver adsorbed on activated carbon according to the invention, the aqueous thiosulfate solution is maintained at more than or equal to pH 4 and less than pH 7.

In another embodiment of the method of eluting gold and silver adsorbed on activated carbon according to the invention, the aqueous thiosulfate solution is maintained at 20 to 90°C.

In another embodiment of the method of eluting gold and silver adsorbed on activated carbon according to the invention, the gold adsorbed on activated carbon is selectively eluted and separated by maintaining the aqueous thiosulfate solution at 60 to 90°C.

In a further embodiment of the method of eluting gold and silver adsorbed on activated carbon according to the invention, the silver adsorbed on activated carbon is selectively eluted and separated by maintaining the aqueous thiosulfate solution at 20 to 50°C.

In a further embodiment of the method of eluting gold and silver adsorbed on activated carbon according to the invention, the aqueous thiosulfate solution is an aqueous sodium thiosulfate solution.

According to another aspect of the invention, there is provided a method of recovering gold and silver from an aqueous thiosulfate solution including the gold and silver which is obtained by the method of eluting gold and silver adsorbed on activated carbon according to the invention.

### Advantageous Effects of Invention

According to the invention, it is possible to efficiently elute gold and silver adsorbed on activated carbon.

### Brief Description of Drawings

Fig. 1 shows the concentration of Au in solution with respect to an elution time obtained in Example 1.
Fig. 2 shows the concentration of Ag in solution with respect to an elution time obtained in Example 1.
Fig. 3 shows the concentration of Au in solution obtained in Example 2.
Fig. 4 shows the concentration of Ag in solution obtained in Example 2.

### Description of Embodiments

A method of eluting gold and silver adsorbed on activated carbon according to the invention includes eluting gold and silver on activated carbon, on which the gold and silver are adsorbed, using an aqueous thiosulfate solution that is maintained at less than pH 7.

As the activated carbon, there are various activated carbons such as coconut shell activated carbon and coke activated carbon, and it may be derived from any of raw materials.

The activated carbon which is used in the invention adsorbs at least gold and silver. In the invention, the gold and silver are eluted from the activated carbon and separated. The grades of the respective gold and silver adsorbed on the activated carbon are not limited.

In the invention, the aqueous thiosulfate solution that is maintained at less than pH 7 is used as an eluent. Examples of the thiosulfate may be sodium thiosulfate, potassium thiosulfate, and so on. It is particularly effective for eluting gold and silver to use sodium thiosulfate. When the pH of sodium thiosulfate solution is less than 7, the sodium thiosulfate is partially decomposed and forms sulfur.

The aqueous thiosulfate solution elutes the gold and silver from the activated carbon and the eluted silver is made precipitation as silver sulfide. The precipitated silver sulfide is separated from the eluent and treated using a chemical reduction method or the like, and thus a silver metal may be recovered.

Meanwhile, since gold is eluted with the aqueous thiosulfate solution, but gold does not form metal sulfides, and thus the gold remains in an eluted state in the eluent. If necessary, gold can also be recovered as metal gold from the eluent using a chemical reduction method, a solvent extraction-electrowinning method or the like.

In the elution of gold and silver from activated carbon, the concentration of thiosulfate ions is preferably adjusted with respect to amounts of the gold and silver to be eluted. Particularly, since sulfide is necessary to recover silver as sulfide precipitation, it is claimed to decompose a significant amount of thiosulfate ions. In case of over-decomposition of thiosulfate, sulfur is adsorbed onto the activated carbon and disrupts the elution of the gold and silver. Specifically, the concentration of thiosulfate ions of the aqueous thiosulfate solution may be adjusted to 0.01 to 1.0 mol/L. The elution effect is saturated at the concentration of thiosulfate ions of 0.5 mol/L. Needless to say, a necessary amount of thiosulfate varies with the amount of gold and silver adsorbed on activated carbon, but the gold and silver are not lost even when the elution is insufficient as described above. When an excessive amount of thiosulfate is added, the surface of the activated carbon would be covered by sulfur and the elution is inhibited. Accordingly, the practical concentration of thiosulfate is 0.01 to 0.5 mol/L.

The aqueous thiosulfate solution which is used as an eluent is maintained at less than pH 7, and preferably more than or equal to pH 4 and less than pH 7, and more preferably more than or equal to pH 4.5 and less than pH 6. The thiosulfate solution maintained at less than pH 7 promotes the formation of sulfur caused by decomposing thiosulfate ions, and the eluted silver ions become to sulfide precipitation while favorably forming sulfur.

It is preferable that an elution temperature should be adjusted in accordance with the concentration of thiosulfate ions. The decomposition of thiosulfate ions is promoted at 20 to 90°C. In order not to disrupt the elution of both of the gold and silver, when the concentration of thiosulfate ions is low, it is effect to prevent that surface of activated carbon would be covered by sulfur. So the elution is preferably performed at low temperature. When the elution temperature is close to the room temperature, it is possible to selectively elute and separate silver from gold and silver mixture adsorbed on activated carbon. In this respect, the elution temperature is more preferably adjusted to 20 to 50°C. On the other hand, a higher temperature is preferred from the viewpoint of an improvement in result of separation of the gold and silver, and specifically, the elution temperature is even more preferably 60 to 90°C. By maintaining the aqueous thiosulfate solution at 60 to 90°C in this way, the gold adsorbed on activated carbon can be selectively eluted and separated.

After the silver is selectively eluted, as described above, from the activated carbon that gold and silver are adsorbed on, remained gold can be consecutively eluted from the activated carbon. In particular, the silver is selectively eluted from the activated carbon that gold and silver are adsorbed on, by immersing the activated carbon in the aqueous thiosulfate solution (eluent) that is maintained at 20 to 50°C and at less than pH 7. Then, a supernatant of the eluent including the eluted silver component is recovered. Next, the eluent is heated and maintained at 60 to 90°C, and the remained gold is eluted from the activated carbon to be recovered in the same way. Thus, gold and silver can be favorably separated and recovered from the activated carbon that gold and silver are adsorbed on.

Further, after the gold is selectively eluted, as described above, from the activated carbon that gold and silver are adsorbed on, remained silver can be consecutively eluted from the activated carbon. In particular, the gold is selectively eluted from the activated carbon that gold and silver are adsorbed on, by immersing the activated carbon in the aqueous thiosulfate solution (eluent) that is maintained at 60 to 90°C and at less than pH 7. Then, a supernatant of the eluent including the eluted gold component is recovered. Next, the eluent is cooled and maintained at 20 to 50°C, and the remained silver is eluted from the activated carbon to be recovered in the same way. Thus, gold and silver can be favorably separated and recovered from the activated carbon that gold and silver are adsorbed on.

In addition, the activated carbon of the invention may be repeatedly used for adsorption of silver and gold even after elution of silver and gold. It is more preferable costwise.

According to the above-described separation method of the invention, gold and silver adsorbed on activated carbon may be efficiently eluted by using thiosulfate solution as an eluent with a simple operation of adjustment pH.

### Examples

Hereinafter, Examples of the invention will be described. However, these Examples are provided in order to understand the invention and advantages thereof better and there is no intent to limit the invention.

### (Example 1)

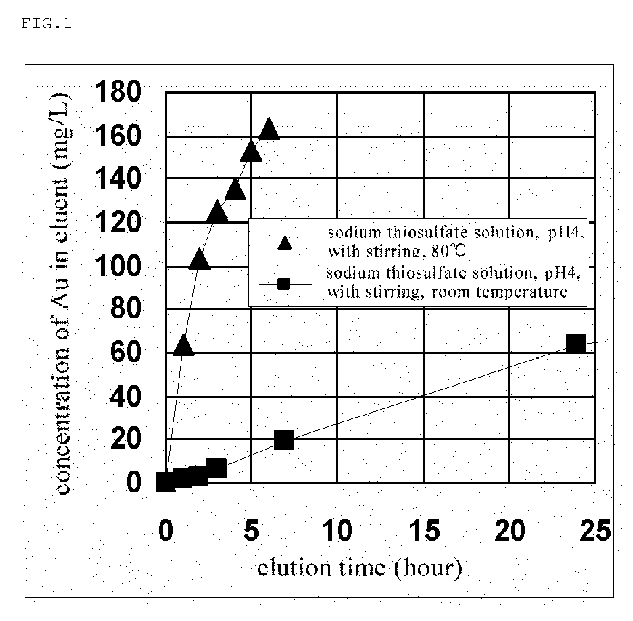

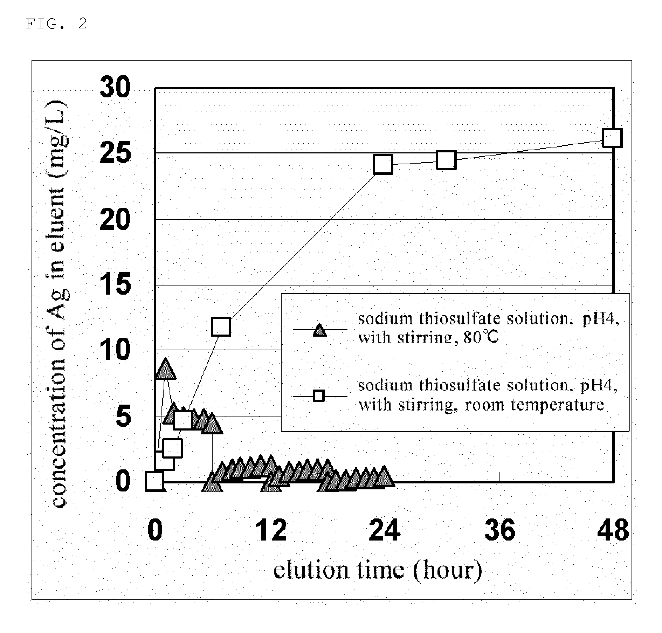

An activated carbon (granular coconut shell activated carbon manufactured by Taihei Chemical Industrial Co., Ltd.,) which had adsorbed the gold from leachate in which the gold had leached from concentrates was prepared. In the activated carbon, the grade of Au was 9000 g/ton and Ag was 1400 g/ton. 0.1 M - sodium thiosulfate solution was used as an eluent, and the pH was adjusted to 4 and the temperature of the eluent was adjusted to room temperature (20 to 30°C) and 80°C. The above-described activated carbon was immersed in the eluent, and then stirred. The solution was sampled at every one hour from the start and the concentrations of the gold and silver in the eluent were determined by ICP. Figs. 1 and 2 show the results of the concentrations of the gold and silver in the solution. As shown in Fig. 1, in the case of eluting at 80°C, it can be seen that gold was favorably eluted more than silver from the activated carbon. Further, in the case of eluting at 80°C, the Au concentration was 160 mg/L and the Ag concentration was less than 1 mg/L in the solution after 6 hours of the elution. In case of elution at 80°C, it was possible to separate the gold and silver, and also the elution rate of Au was improved. Meanwhile, as shown in Fig. 2, in the case of eluting at room temperature, it can be seen that silver was favorably eluted more than gold from the activated carbon. Further, in the case of eluting at room temperature, the Au concentration after 6 hours elution was 20 mg/L at its maximum, and after that, Au was adsorbed again. The Ag concentration was 25 mg/L in the solution without change of the concentration. Regarding the silver, the entire amount of the silver on the activated carbon was eluted.

### (Example 2)

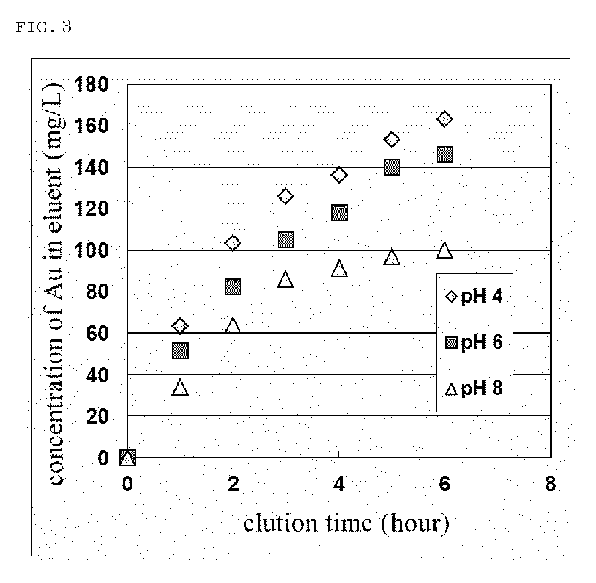

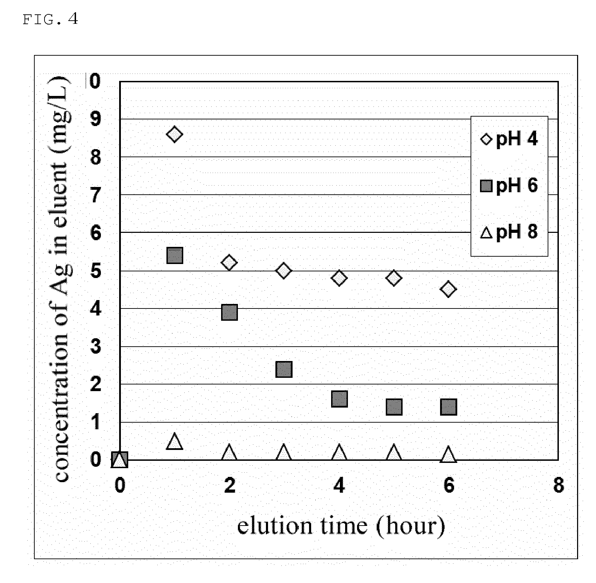

An activated carbon (granular coconut shell activated carbon manufactured by Taihei Chemical Industrial Co., Ltd.,) which had adsorbed the gold from leachate in which the gold had leached from concentrates was prepared. In the activated carbon, the grade of Au was 9000 g/ton and Ag was 1400 g/ton. 0.1 M - sodium thiosulfate solution was used as an eluent, and the pH was adjusted to 4, 6, 8 and the temperature of the eluent was adjusted to 80°C. The above-described activated carbon was immersed in the eluent, and then stirred. The solution was sampled at every one hour from the start and the concentrations of the gold and silver in the eluent were determined by ICP. Figs. 3 and 4 show the results of the concentrations of the gold and silver in the solution. As shown in Figs. 3 and 4, in the case of eluting by the eluent having pH 8, both gold and silver were poorly eluted.

## Claims

1. A method of eluting gold and silver adsorbed on activated carbon, the method comprising:
eluting gold and silver on activated carbon, on which at least the gold and silver are adsorbed, by using an aqueous thiosulfate solution that is maintained at less than pH 7.

2. The method of eluting gold and silver adsorbed on the activated carbon according to claim 1, wherein the aqueous thiosulfate solution is maintained at more than or equal to pH 4 and less than pH 7.

3. The method of eluting gold and silver adsorbed on the activated carbon according to claim 1 or 2, wherein the aqueous thiosulfate solution is maintained at 20 to 90°C.

4. The method of eluting gold and silver adsorbed on the activated carbon according to claim 3, wherein the gold adsorbed on activated carbon is selectively eluted and separated by maintaining the aqueous thiosulfate solution at 60 to 90°C.

5. The method of eluting gold and silver adsorbed on the activated carbon according to claim 3, wherein the silver adsorbed on activated carbon is selectively eluted and separated by maintaining the aqueous thiosulfate solution at 20 to 50°C.

6. The method of eluting gold and silver adsorbed on the activated carbon according to any one of claims 1 to 5, wherein the aqueous thiosulfate solution is an aqueous sodium thiosulfate solution.

7. A method of recovering gold and silver from an aqueous thiosulfate solution including the gold and silver which are obtained by the method of eluting gold and silver adsorbed on the activated carbon according to any one of claims 1 to 6.
